# EUROPÄISCHE PATENTANMELDUNG

(11) **EP 2 479 447 A1**
(43) Veröffentlichungstag der Anmeldung: **25.07.2012**
(21) Anmeldenummer: 12151941.7
(22) Anmeldetag: 20.01.2012
(51) Int. Cl.: F16D 1/08

(54) **Kupplung**

(30) Priorität: 20.01.2011 DE 102011002919
(71) Anmelder: Otto Bihler Handels-Beteiligungs-GmbH, 87642 Halblech (DE)
(72) Erfinder: Köpf, Johann, 87642 Halblech (DE); Etschmann, Heinrich, 87642 Halblech (DE)
(74) Vertreter: Tiesmeyer, Johannes

(57) **Zusammenfassung**

Kupplungsverbindung zwischen einem Kupplungselement und wenigstens einer Welle, die einen Einsteckabschnitt mit einem vorbestimmten Nominaldurchmesser (d2) hat, wobei das Kupplungselement eine Kupplungshülse (10) mit einer den Einsteckabschnitt der Welle (22) aufnehmenden Wellenaufnahmebohrung (12) und mit einem von der Wellenaufnahmebohrung radial nach außen durchgehenden Spannspalt (16) sowie eine zur Änderung der Spaltbreite des Spannspaltes (16) betätigbare Klemmvorrichtung (18) zum Einklemmen der Welle in der Kupplungshülse aufweist, wobei die Wellenaufnahmebohrung mit einem bestimmten Nominaldurchmesser (d1) gefertigt und zur Herstellung der Kupplungsverbindung bereitgestellt worden ist, wobei in der Wellenaufnahmebohrung der Kupplungshülse wenigstens eine innere Spreiznut (20) verläuft und dass der Nominaldurchmesser (d1) der Wellenaufnahmebohrung kleiner ist als der Nominaldurchmesser (d2) des Einsteckabschnittes der Welle, so dass der Einsteckabschnitt der Welle bei zumindest bereichsweise über ihren Nominaldurchmesser (d1) hinaus aufgeweiteter Wellenaufnahmebohrung in der Wellenaufnahmebohrung klemmend in Eingriff gehalten ist. Gegenstand der Erfindung ist auch ein Verfahren, eine Kupplungsbaugruppe und ein Kupplungselement zur Herstellung der Kupplungsverbindung.

## Beschreibung

Die vorliegende Erfindung betrifft eine Kupplungsverbindung zwischen einem Kupplungselement und einer Welle. Sie betrifft insbesondere ein Kupplungselement umfassend eine Kupplungshülse mit einer darin vorgesehenen Wellenaufnahmebohrung, die zumindest über eine bestimmte Tiefe mit einem bestimmten Nominaldurchmesser gefertigt worden ist und in die eine jeweilige anzukuppelnde Welle einzustecken ist, und mit wenigstens einem von der Wellenaufnahmebohrung radial nach außen durchgehenden Spannspalt sowie eine Klemmvorrichtung zum Einklemmen einer betreffenden Welle in der Kupplungshülse durch Änderung der Spaltbreite des Spannspaltes.

Die Erfindung betrifft ferner eine Kupplungsbaugruppe mit einem solchen Kupplungselement und wenigstens einer damit drehfest zur gemeinsamen Drehung zu kuppelnden Welle, die einen in die Wellenaufnahmebohrung der Kupplungshülse einzusteckenden Einsteckabschnitt mit einem vorbestimmten Nominaldurchmesser aufweist.

Die Erfindung betrifft ferner ein Verfahren zur Herstellung einer Kupplungsverbindung zwischen einem Kupplungselement der eingangs genannten Art und wenigstens einer Welle.

Kupplungsverbindungen sind Verbindungen, die Drehmomente von einem ersten Bauelement auf ein zweites Bauelement, beispielsweise von einer Motorwelle auf eine Getriebewelle, übertragen. Die vorliegende Erfindung befasst sich primär mit Kupplungselementen bzw. Kupplungsanordnungen geringer Baugröße, wie sie z. B. bei nummerisch gesteuerten Bearbeitungsmaschinen verwendet werden, um eine Motorwelle eines NC-Elektromotors mit einer Getriebewelle zu kuppeln.

Zur Zeit bekannte Kupplungen mit Kupplungselementen geringer Baugröße übertragen im Verhältnis zu ihrer Baugröße nur relativ niedrige Drehmomente. Da Elektromotoren und insbesondere NC-Motoren im Zuge ihrer Entwicklung zunehmend leistungsstärker geworden sind, ohne an Baugröße zuzunehmen, haben sich die zur Kupplung solcher Motoren mit Getriebewellen verwendeten Kupplungselemente in zunehmendem Maße als Schwachstellen erwiesen, die die hohen Motordrehmomente nicht mehr zuverlässig übertragen können. Es kommt bei solchen Kupplungsverbindungen zu einem Durchrutschen der Wellen im Kupplungselement.

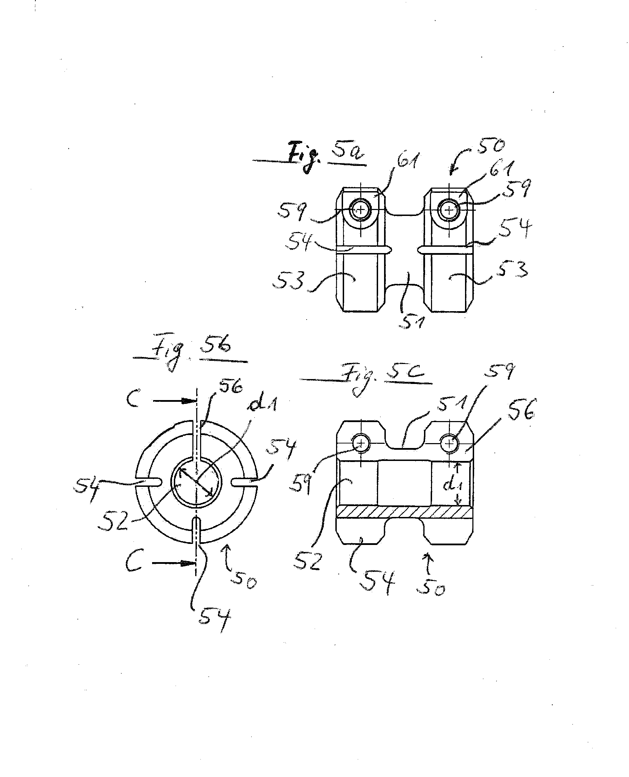

Kupplungselemente der hier betrachteten Art sind z. B. aus dem Bereich der NC-Maschinenaggregate, wie etwa Schraubaggregate, Bohraggregate u. dgl. bekannt. Eine Kupplungshülse eines solchen bekannten Kupplungselementes ist in den Figuren 5a - 5c in Seitenansicht, Vorderansicht und Längsschnittansicht gezeigt. Diese Kupplungshülse 50 weist eine axial durchgehende Wellenaufnahmebohrung 52 mit einem vorbestimmten Nominaldurchmesser d1 in ihrem engsten Wellenaufnahmebereich auf. An den axialen Enden der Kupplungshülse 50 ist die Wellenaufnahmebohrung konisch ein wenig erweitert, also angefast, um das EinfüOhren von Wellen zu erleichtern. Von der Wellenaufnahmebohrung 52 erstreckt sich radial nach außen durchgehend ein Spannspalt 56, der axial über die gesamte Länge der Kupplungshülse 50 verläuft. In der Außenkontur weist die Kupplungshülse 50 einen taillierten zentralen Bereich 51 und zwei axial randseitige, flanschartige, dickere Bereiche 53, also Bereiche mit größerem Außendurchmesser als der zentrale Bereich 51, auf. In den dickeren Bereichen 53 weist die Kupplungshülse 50 äußere Spreiznuten 54 auf, welche die erforderliche Deformation der Kupplungshülse 50 beim Einspannen zu kuppelnder Wellen erleichtern.

Wie in den Fig. 5a und 5c zu erkennen ist, weist die Kupplungshülse 50 in jedem der dickeren Bereiche 53 eine tangential zur Wellenaufnahmebohrung 52 verlaufende Bohrung 59 auf, die sich über den Spannspalt 56 hinweg und quer dazu fortsetzt. Der sich über dem Spannspalt 56 hinweg fortsetzende Abschnitt der jeweiligen Bohrung 59 ist mit einem Schraubgewinde versehen, in welches eine in die Bohrung 59 einzuführende Spannschraube (in Fig. 5a - 5c nicht gezeigt) einzuschrauben ist. Die Spannschraube erstreckt sich dann entsprechend dem Verlauf der Bohrung 59 ebenfalls näherungsweise tangential zur Wellenaufnahmebohrung 52 und stützt sich mit ihrem Schraubkopf an einer präparierten Gegenlagerfläche 61 am Umfang des jeweiligen dickeren Bereichs 53 der Kupplungshülse 50 ab. Durch Anziehen der Spannschrauben erfolgt eine Verengung des Spannspaltes 56, wobei die am Umfang der Kupplungshülse 50 außen liegenden Spreiznuten 54 eine Formnachgiebigkeit der Kupplungshülse ermöglichen, um die Wellenaufnahmebohrung 52 zu verengen. Bei der Herstellung einer Kupplungsverbindung zwischen einem solchen bekannten Kupplungselement und einer oder zwei Wellen wurden stets Kupplungshülsen verwendet, bei denen der Nominaldurchmesser d1 der Kupplungshülse größer ist als der Außendurchmesser des komplementären Einsteckabschnittes der anzukuppelnden Welle, wobei mit Nominaldurchmesser d1 der Durchmesser der Wellenaufnahmebohrung im unverspannten Zustand der Kupplungshülse gemeint ist.

Nachdem z. B. eine Motorwelle auf einer Seite der Kupplungshülse 50 und z. B. eine Getriebewelle auf der anderen Seite der Kupplungshülse 50 in die Wellenaufnahmebohrung 52 eingeführt worden sind, kann durch Betätigen der tangentialen Spannschrauben (nicht gezeigt) in den Bohrungen 59 erreicht werden, dass die betreffenden Einsteckenden der Wellen in der Kupplungshülse 50 eingeklemmt werden, wobei sich der Spannspalt 56 und die Wellenaufnahmebohrung 52 entsprechend verengen.

Zum Stand der Technik wird ferner auf die DE 24 33 282 A1 verwiesen, in der ein gattungsgemäßes Kupplungselement beschrieben ist.

Aufgabe der vorliegenden Erfindung ist es, eine Kupplungsverbindung mit einem Kupplungselement bereitzustellen, welches bei nach wie vor kleiner Baugröße größere Drehmomente übertragen kann als Kupplungselemente der oben beschriebenen Art nach dem Stand der Technik. Ferner ist es Aufgabe der Erfindung, ein Verfahren anzugeben, wie man mit einem Kupplungselement nach der Erfindung eine Kupplungsverbindung für die Übertragung relativ großer Drehmomente herstellen kann.

Zur Lösung dieser Aufgaben wird eine Kupplungsverbindung mit den Merkmalen des Anspruchs 1 vorgeschlagen, nämlich eine Kupplungsverbindung zwischen einem Kupplungselement und wenigstens einer Welle, die einen Einsteckabschnitt mit einem vorbestimmten Nominaldurchmesser hat, wobei das Kupplungselement eine Kupplungshülse mit einer den Einsteckabschnitt der Welle aufnehmenden Wellenaufnahmebohrung und mit einem von der Wellenaufnahmebohrung radial nach außen durchgehenden Spannspalt sowie eine zur Änderung der Spaltbreite des Spannspaltes betätigbare Klemmvorrichtung zum Einklemmen der Welle in der Kupplungshülse aufweist, wobei die Wellenaufnahmebohrung mit einem bestimmten Nominaldurchmesser gefertigt und zur Herstellung der Kupplungsverbindung bereitgestellt worden ist, dadurch gekennzeichnet, dass in der Wellenaufnahmebohrung der Kupplungshülse wenigstens eine innere Spreiznut verläuft und dass der Nominaldurchmesser der Wellenaufnahmebohrung kleiner ist als der Nominaldurchmesser des Einsteckabschnittes der Welle, so dass der Einsteckabschnitt der Welle bei zumindest bereichsweise über ihren Nominaldurchmesser hinaus aufgeweiteter Wellenaufnahmebohrung in der Wellenaufnahmebohrung klemmend in Eingriff gehalten ist.

Ferner wird ein Kupplungselement für eine Kupplungsverbindung bereitgestellt, welches eine Kupplungshülse mit einer darin vorgesehenen Wellenaufnahmebohrung, die zumindest über eine bestimmte Tiefe mit einem bestimmten Nominaldurchmesser gefertigt ist und in die eine jeweilige anzukuppelnde Welle einzustecken ist, und mit wenigstsens einem von der Wellenaufnahmebohrung radial nach außen durchgehenden Spannspalt sowie eine Klemmvorrichtung zum Einklemmen einer betreffenden Welle in der Kupplungshülse durch Änderung der Spaltbreite des Spannspaltes umfasst, wobei das Kupplungselement erfindungsgemäß dadurch gekennzeichnet ist, dass die Kupplungshülse wenigstens eine in der Wellenaufnahmebohrung in deren Längsrichtung verlaufende radial innere Spreiznut aufweist.

Die Erfinder haben festgestellt, dass mit einem solchen Kupplungselement eine erfindungsgemäße Kupplungsverbindung mit großer Drehmomentübertragung zwischen einer Welle und dem Kupplungselement hergestellt werden kann, wenn der Nominaldurchmesser der Wellenaufnahmebohrung in ihrem engsten Wellenaufnahmebereich, also deren Wellenaufnahmebereichsdurchmesser im unverspannten Zustand der Kupplungshülse geringfügig kleiner als der Außendurchmesser des Einsteckabschnittes der anzukuppelnden Welle ist. Geringfügig kleiner bedeutet hier, dass das Übermaß des Einsteckabschnittsdurchmessers relativ zum Nominaldurchmesser der Wellenaufnahmebohrung vorzugsweise einen Wert aus dem Bereich 0,05% bis 0,5% des Nominaldurchmessers der Wellenaufnahmebohrung hat. Dabei ist zu berücksichtigen, dass für den Vorgang des Einsteckens der Welle in die Wellenaufnahmebohrung der Kupplungshülse diese an ihrem Spannspalt zunächst etwas aufzuweiten ist, und zwar so weit, dass die zu kuppelnde Welle in die Wellenaufnahmebohrung leicht einsteckbar ist. Nach dem Einstecken der Welle erfolgt dann das Einklemmen unter Verwendung der Klemmvorrichtung, wobei der Spannspalt dabei wieder verengt wird. Es hat sich gezeigt, dass eine solche Vorgehensweise möglich ist, wenn wenigstens eine innere Spreiznut in der Wellenaufnahmebohrung längs dieser Wellenaufnahmebohrung verläuft. Vorzugsweise sollten wenigstens zwei solcher innerer Spreiznuten in Umfangsrichtung der Wellenaufnahmebohrung beabstandet vorgesehen sein. Die Spreiznut bzw. die Spreiznuten erleichtern bzw. ermöglichen nicht nur den Aufweitvorgang der Wellenaufnahmebohrung, sondern wirken auch bei dem Vorgang des Anschmiegens des Kupplungshülsenmaterials an die anzukuppelnde Welle beim Einklemmen der Welle, so dass eine sehr gut kraftschlüssig wirksame Presspassung zwischen dem Kupplungselement und der Welle entsteht. Drehmomentmessungen haben ergeben, dass die mittels einer solchen Kupplungsverbindung übertragbaren Drehmomente sehr hoch sein können. Dabei war es nicht erforderlich, die Baugröße des Kupplungselementes gegenüber Kupplungselementen nach dem Stand der Technik (vgl. Fig. 5a - 5c) zu vergrößern.

Wie schon erwähnt, dient ein Kupplungselement der hier betrachteten Art vorzugsweise zur Kupplung zweier Wellen miteinander. Ein erfindungsgemäßes Kupplungselement kann jedoch auch Bestandteil eines rotierend anzutreibenden oder antreibenden Elementes sein, welches keine Welle ist, so dass es lediglich mit einer einzigen Welle zu kuppeln ist.

Hinsichtlich des Vorgangs des Aufweitens der Wellenaufnahmeöffnung sei darauf hingewiesen, dass dieser nicht notwendigerweise, aber vorzugsweise bis in den Bereich plastischer Verformung des Kupplungselementes erfolgt, bevor die Welle eingeklemmt wird. Auf diese Weise wird erreicht, dass die Welle bei Bedarf ohne großen Aufwand wieder ausgebaut werden kann. Nach Lösen der Klemmvorrichtung kann die Welle ohne nennenswerten Kraftaufwand aus der Aufnahmeöffnung des Kupplungselementes gezogen werden, etwa um Wartungs-, Reparatur- oder Austauscharbeiten vorzunehmen.

Gemäß einer Ausführungsform der Erfindung ist die Kupplungshülse einteilig ausgebildet.

Eine andere Ausführungsform der Erfindung sieht vor, dass die Kupplungshülse zweiteilig ausgebildet ist und zwei Spannspalte aufweist. Denkbar wäre auch eine weitere Unterteilung der Kupplungshülse. Bei der zweiteiligen Ausführungsform sind an jedem der Spannspalte wirksame Komponenten der Klemmvorrichtung erforderlich, die eine Verengung der Spannspalte beim Einklemmen einer oder zweier Wellen in der Wellenaufnahmeöffnung ermöglichen. Bei dieser zweiteiligen Lösung der Kupplungshülse ist der Aufweitvorgang in dem oben beschriebenen Sinne nicht erforderlich. Es ist lediglich dafür Sorge zu tragen, dass die Spannspalte so weit geöffnet sind, dass die anzukuppelnden Wellen in die Wellenaufnahmebohrung einsteckbar sind. Bei der zweiteiligen Lösung der Kupplungshülse ist mit Nominaldurchmesser der Durchmesser gemeint, den die Wellenaufnahmebohrung im nicht verzerrten Zustand ihres Kreisquerschnittes aufweist.

Eine bevorzugte Ausführungsform des Kupplungselementes nach der Erfindung ist dadurch gekennzeichnet, dass die Wellenaufnahmebohrung durch die Kupplungshülse axial hindurchgeht und zumindest an ihren entgegengesetzten axialen Enden jeweils wenigstens einen Spannspalt und jeweils wenigstens eine innere Spreiznut aufweist, so dass das Kupplungselement zwei Wellen miteinander kuppeln kann, die an den entgegengesetzten axialen Enden der Wellenaufnahmebohrung in die Kupplungshülse einzustecken sind. Vorzugsweise verlaufen auch der bzw. die Spannspalte und der bzw. die radial inneren Spreiznuten axial über die gesamte Länge der Kupplungshülse.

Die Wellenaufnahmebohrung kann einen über ihre gesamte Länge im Wesentlichen gleich bleibenden Nominaldurchmesser aufweisen, wobei fasenartige Abschrägungen an den axial äußeren Enden diesbezüglich außer Acht bleiben.

Spezialausführungsformen des Kupplungselementes nach der Erfindung können jedoch so gestaltet sein, dass die Wellenaufnahmebohrung an den entgegengesetzten axialen Enden der Kupplungshülse unterschiedliche Nominaldurchmesser aufweist, so dass sie Wellen mit unterschiedlichen Nominaldurchmessern aufnehmen kann. Allgemein beziehen sich die Nominaldurchmesserangaben zur Kupplungshülse auf Wellenaufnahmebereiche der Wellenaufnahmebohrung. Dies sind die sich axial erstreckenden Wellenaufnahmebohrungsabschnitte, die im Kupplungszustand die betreffende Welle klemmend berühren.

Es hat sich als vorteilhaft erwiesen, wenn alle Spannspalte und alle Spreizspalte in Umfangsrichtung der Wellenaufnahmebohrung im Wesentlichen äquidistant verteilt angeordnet sind. Damit wird eine sehr gleichmäßige Verteilung der Klemmkraft am Umfang der betreffenden Welle in der Kupplungshülse erreicht.

Vorzugsweise umfasst die Klemmvorrichtung für jeden Spannspalt jeweils wenigstens eine Spannschraubenanordnung, mittels welcher die Spaltbreite des betreffenden Spannspaltes änderbar ist. Gemäß einer bevorzugten Ausführungsform der Erfindung weist die Spannschraubenanordnung wenigstens eine den jeweiligen Spannspalt in Richtung tangential zur Wellenaufnahmebohrung quer durchsetzende und in ein Gewinde der Kupplungshülse eingeschraubte Spannschraube auf.

Eine bevorzugte Ausführungsform des Kupplungselementes nach der Erfindung ist dadurch gekennzeichnet, dass die Kupplungshülse an ihren beiden axialen Enden im Wesentlichen gleich geformte dickere Bereiche und einen dazwischen liegenden dünneren Bereich aufweist und dass in jedem der dickeren Bereiche wenigstens eine sich tangential zur Wellenaufnahmebohrung erstreckende, einen jeweiligen Spannspalt quer durchsetzende und in ein Gewinde der Kupplungshülse eingeschraubte Spannschraube der Klemmvorrichtung vorgesehen ist. Als besonders vorteilhaft hat es sich erwiesen, wenn sich die Spreiznuten über die gesamte Länge der Kupplungshülse erstrecken und in dem dünneren Bereich der Kupplungshülse einen jeweiligen radial nach außen offenen Durchstich bilden. Der taillierte dünnere Bereich kann dann sehr wirksam und flexibel Fluchtungsfehler und kleine Winkelversätze der angekuppelten Wellen ausgleichen.

Mittels des erfindungsgemäßen Kupplungselementes können insbesondere mit einem relativ niedrigen auf die Spannschraubenanordnung anzuwendenden Anzugsdrehmoment große Klemmkräfte auf die zu kuppelnden Wellen ausgeübt werden, so dass hohe Drehmomente von dem Kupplungselement auf die angekuppelten Wellen und umgekehrt übertragen werden können.

Gegenstand der Erfindung ist ferner ein Verfahren zur Herstellung einer Kupplungsverbindung, welches folgende Schritte umfasst:
- Bereitstellen eines Kupplungselementes nach der Erfindung,
- Bereitstellen einer mit dem Kupplungselement zu kuppelnden Welle, die einen in die Wellenaufnahmebohrung der Kupplungshülse einzusteckenden Einsteckabschnitt mit einem vorbestimmten Nominaldurchmesser aufweist, der vorzugsweise geringfügig größer ist als der Nominaldurchmesser der Wellenaufnahmebohrung der Kupplungshülse,
- Aufweiten der Wellenaufnahmebohrung des Kupplungselementes nahe an einem axialen Ende der Kupplungshülse, so dass die Welle an diesem axialen Ende der Kupplungshülse in die Wellenaufnahmebohrung einsteckbar ist,
- Einstecken der Welle in die Wellenaufnahmebohrung,
- Einklemmen der Welle in der Wellenaufnahmebohrung unter Verengung des Spannspaltes mittels der Klemmvorrichtung.

Die Durchführung dieses Verfahrens führt zu einer Kupplungsverbindung nach der Erfindung zur Übertragung großer Drehmomente zwischen dem Kupplungselement und der Welle mit den vorstehend in Bezug auf das Kupplungselement erläuterten Vorteilen.

Vorzugsweise umfasst das erfindungsgemäße Verfahren weiterhin die Schritte:
- Bereitstellen einer zweiten mit dem Kupplungselement zu kuppelnden Welle, die einen an dem anderen axialen Ende der Kupplungshülse in die Wellenaufnahmebohrung einzusteckenden Einsteckabschnitt mit einem vorbestimmten Nominaldurchmesser aufweist, der vorzugsweise geringfügig größer ist als der Nominaldurchmesser der Wellenaufnahmebohrung an dem anderen axialen Ende der Kupplungshülse,
- Aufweiten der Wellenaufnahmebohrung des Kupplungselementes an dem anderen axialen Ende der Kupplungshülse, so dass die zweite Welle an diesem anderen axialen Ende der Kupplungshülse in die Wellenaufnahmebohrung einsteckbar ist,
- Einstecken der Welle in die Wellenaufnahmebohrung,
- Einklemmen der Welle in der Wellenaufnahmebohrung unter Verengung des betreffenden Spannspaltes mittels der Klemmvorrichtung.

Diese Verfahrensvariante schafft somit eine Kupplungsverbindung zweier Wellen mittels dem Kupplungselement nach der Erfindung. Vorzugsweise erfolgt das Einklemmen der jeweiligen Welle in der Wellenaufnahmebohrung durch Betätigen einer die Spaltbreite des jeweiligen Spannspaltes beeinflussenden Spannschraubenanordnung der Klemmvorrichtung.

Gegenstand der Erfindung ist ferner eine Kupplungsbaugruppe mit einem Kupplungselement nach einem der vorhergehenden Ansprüche und wenigstens einer damit drehfest zur gemeinsamen Drehung zu kuppelnden Welle, die einen in die Wellenaufnahmebohrung der Kupplungshülse einzusteckenden Einsteckabschnitt mit einem vorbestimmten Nominaldurchmesser aufweist, der geringfügig größer ist als der Nominaldurchmesser der Wellenaufnahmebohrung der Kupplungshülse, wobei die Wellenaufnahmebohrung unter Vergrößerung der Spannspaltbreite so weit aufweitbar ist, dass die Welle in die Kupplungshülse einsteckbar ist, und wobei eine in die Wellenaufnahmebohrung eingesteckte Welle durch Verengung des betreffenden Spannspalts in der Kupplungshülse einklemmbar ist.

Das Übermaß des Wellendurchmessers am Einsteckende der Welle relativ zum Nominaldurchmesser der Wellenaufnahmebohrung ist vorzugsweise gering und kann - wie erwähnt - z. B. bei etwa 0,05 bis 0,5% des Nominaldurchmessers der Wellenaufnahmebohrung liegen. Bei Versuchen mit einem Kupplungselement mit einem Nominaldurchmesser der Wellenaufnahmebohrung von etwa 10 mm wurde eine anzukuppelnde Welle mit einem um 0,02 - 0,03 mm größeren Durchmesser gewählt. Die damit hergestellte Kupplungsverbindung hat sehr gute Kupplungsergebnisse gezeigt.

Das Kupplungselement ist vorzugsweise aus Stahl oder Titan gefertigt. Es sind aber auch andere Materialien mit hinreichender Steifigkeit verwendbar.

Nachstehend werden Ausführungsbeispiele unter Bezugnahme auf die Zeichnungen näher erläutert.
- Fig. 1: zeigt in einer teilschematischen Seitenansicht ein erstes Ausführungsbeispiel eines Kupplungselementes nach der Erfindung in einer Kupplungsverbindung;
- Fig. 2a - 2c: zeigen das Kupplungselement aus Fig. 1 in einer perspektivischen Explosionsdarstellung, in einer Draufsicht auf eine Stirnseite und in einer Längsschnittansicht mit dem in Fig. 2b gezeigten Schnittverlauf C-C;
- Fig. 3a-3f: illustrieren in verschiedenen Darstellungen Verfahrensschritte zur Herstellung einer Kupplungsverbindung nach der Erfindung;
- Fig. 4a-4d: zeigen ein zweites Ausführungsbeispiel eines Kupplungselements nach der Erfindung in einer perspektivischen Explosionsdarstellung, einer Draufsicht auf eine der Stirnseiten, einer Längsschnittdarstellung mit dem in Fig. 4b bei C-C markierten Schnittverlauf und einer vergrößerten Ansicht auf eine der Stirnseiten;
- Fig. 5a-5c: zeigen ein Kupplungselement nach dem Stand der Technik in einer Seitenansicht, einer Draufsicht auf eine der Stirnseiten und in einer Längsschnittdarstellung mit dem in Fig. 5b bei C-C markierten Schnittverlauf.

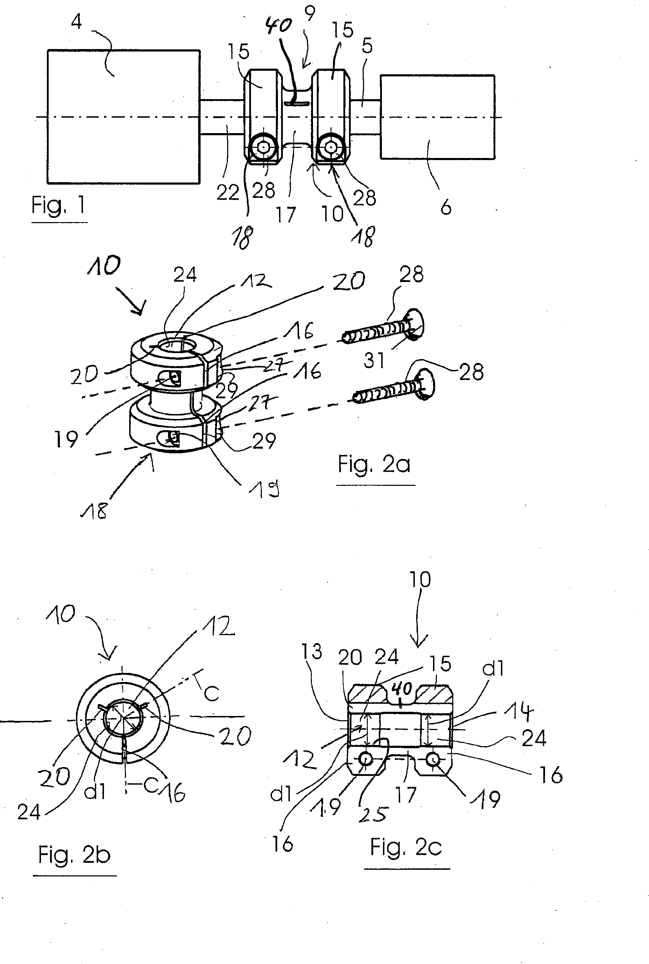

Fig. 1 zeigt in einer teilschematischen Seitenansicht eine Kupplungsverbindung zwischen der Motorwelle 22 eines NC-Elektromotors 4 und der Eingangswelle 5 eines Getriebes 6. Ein Kupplungselement 9 nach der Erfindung stellt die Kupplungsverbindung her.

Das Kupplungselement 9 umfasst eine Kupplungshülse 10 mit einer axial durchgehenden Wellenaufnahmebohrung 12. An den entgegengesetzten Stirnseiten der Kupplungshülse 10 hat die Wellenaufnahmebohrung 12 konisch erweiterte Eingangsbereiche 13, 14, welche das Einführen der Einsteckenden der zu kuppelnden Wellen 22, 5 erleichtern.

Die Kupplungshülse 10 weist einen radial von der Wellenaufnahmebohrung 12 durchgehend nach außen verlaufenden Spannspalt 16 auf, der sich axial über die gesamte Länge der Kupplungshülse 10 erstreckt.

Die Kupplungshülse 10 weist ferner zwei in der Wellenaufnahmebohrung 12 verlaufende innere Spreiznuten 20 auf, die sich im Beispielsfall ebenfalls axial durchgehend von einer Stirnseite zur anderen Stirnseite der Kupplungshülse 10 erstrecken. Diese radial inneren Spreiznuten 20 sind eine Besonderheit der Erfindung. Sie ermöglichen bzw. erleichtern das Aufweiten der Wellenaufnahmebohrung 12 zum Zwecke der Aufnahme von Wellen 22, 5, deren Querschnittsfläche geringfügig größer ist als die Querschnittsfläche der engsten Stelle 25 des Wellenaufnahmebereichs 24 der Wellenaufnahmebohrung 12 im nicht aufgeweiteten, unverspannten Zustand der Kupplungshülse.

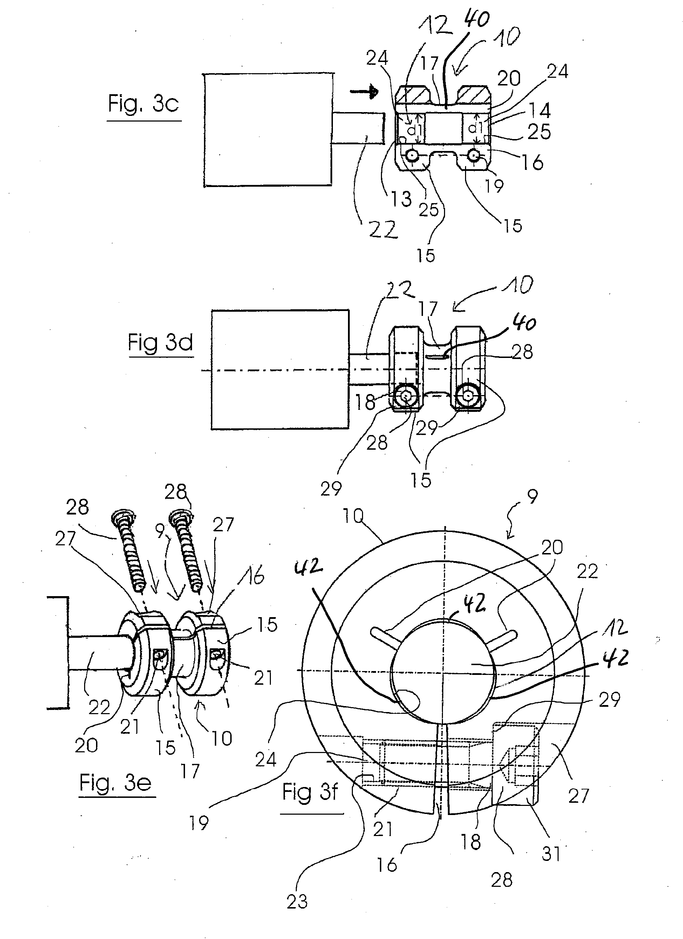

Die Kupplungshülse 10 weist - in Seitenansicht gesehen - an ihren beiden axialen Enden im Wesentlichen gleich geformte Bereiche 15 größeren Außendurchmessers und einen dazwischen liegenden taillierten Bereich 17 mit kleinerem Außendurchmesser auf. In den beiden dickeren Bereichen 15 ist jeweils eine tangential zur Wellenaufnahmebohrung 12 verlaufende Bohrung 19 vorgesehen, die sich über den Spannspalt hinweg fortsetzt (vgl. insbesondere Fig. 3f) und nur in dem sich über dem Spannspalt 16 hinweg fortsetzenden Bereich 21 ein Gewinde 23 aufweist. Die Bohrungen 19 sind Elemente einer als Spannschraubenanordnung 18 realisierten Klemmvorrichtung, zu der ferner Spannschrauben 28 gehören, die in die Bohrungen 19 eingesetzt und mit dem Gewinde 23 verschraubt sind. Im Eingangsbereich der jeweiligen Bohrung 19 weisen die Bereiche 15 der Kupplungshülse 10 einen gegenüber dem Eingangsbereich der Bohrung 19 vergrößerten tangentialen Einstich 27 auf, welcher eine Stützschulter 29 und somit ein Gegenlager für den Kopf der Spannschraube 28 bietet, wie dies in Fig. 3f erkennbar ist. Beim Anziehen der Spannschraube 28 kommt es zur Verengung des Spannspaltes 16 und zu einer entsprechenden Beeinflussung des Querschnitts der Wellenaufnahmebohrung 12.

Die beiden Spreiznuten 20 und der Spannspalt 16 sind in Umfangsrichtung der Wellenaufnahmebohrung 12 äquidistant mit Winkelabständen von 120° angeordnet. Die inneren Spreiznuten 20 bilden in dem taillierten Bereich 17 der Kupplungshülse jeweils einen radial nach außen offenen Durchstichspalt 40. Damit weist der Bereich 17 ausgezeichnete Ausgleichseigenschaften in Bezug auf Fluchtungsfehler oder kleine Winkelversätze der angekoppelten Wellen 5, 22 auf.

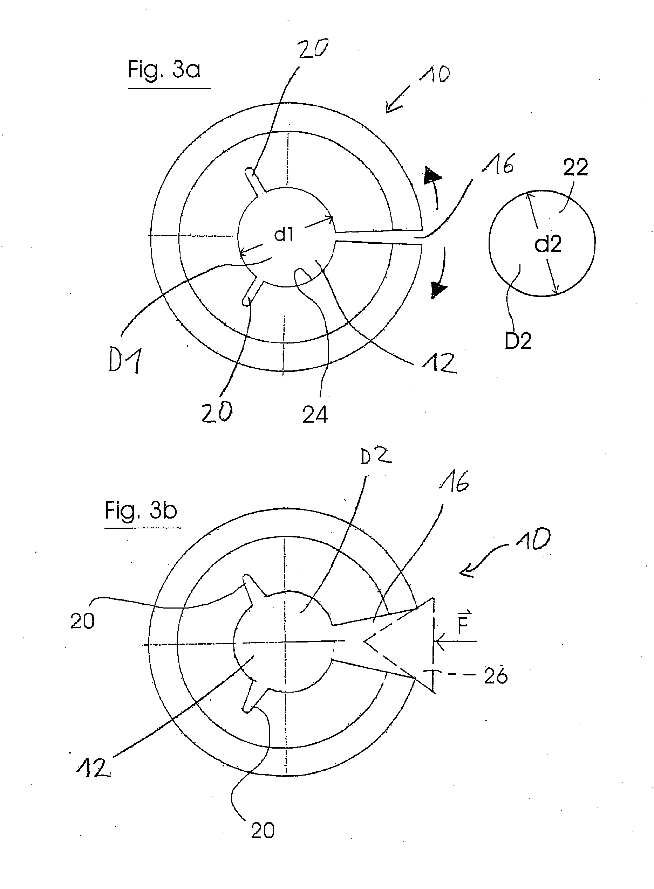

Unter Bezugnahme auf die teils grob schematischen Figuren 3a - 3f wird nachstehend die Herstellung einer Kupplungsverbindung nach der Erfindung mit einem Kupplungselement 9 der vorstehend erläuterten Art beschrieben.

Fig. 3a zeigt in der Ausgangssituation das Kupplungselement 9 mit der Wellenaufnahmebohrung 12, dem radial nach außen verlaufenden Spannspalt 16 und zwei in der Wellenaufnahmebohrung 12 verlaufenden, radial inneren Spreiznuten 20. In alternativen Ausführungsformen könnten auch weitere radial innere Spreiznuten vorgesehen sein. Denkbar wäre auch eine Ausführungsform, bei welcher eine oder mehrere äußere Spreiznuten, also Spreiznuten am Außenumfang der Kupplungshülse 10 in deren dickeren Bereichen 15 vorgesehen sind. Auch kommen nicht äquidistante Anordnungen der Spalte 16, 20 in alternativen Ausführungsbeispielen in Frage.

Fig. 3a zeigt auch das freie Einsteckende der in der Wellenaufnahmebohrung 12 der Kupplungshülse 10 aufzunehmenden Welle 22. Die Welle 22 hat an ihrem Einsteckende eine Wellenquerschnittsfläche D2, welche größer ist als die Öffnungsquerschnittsfläche D1 der Wellenaufnahmebohrung 12 im nicht aufgeweiteten, unverspannten Zustand der Kupplungshülse 10, wobei von einer kreisförmigen Querschnittsfläche D1 ausgegangen wird, d. h. die Spalte 16, 20 werden nicht mitbetrachtet. Der Außendurchmesser d2 der zu kuppelnden Welle 22 ist somit in der Ausgangssituation gemäß Fig. 3a größer als der Nominaldurchmesser d1 der Wellenaufnahmebohrung 12. Im vorliegenden Ausführungsbeispiel ist der Durchmesser d2 der aufzunehmenden Welle 22 vorzugsweise um ca. 0,02 mm bis 0,03 mm größer als der Nominaldurchmesser d1 der Wellenaufnahmebohrung 12. Es sei zur Klarstellung noch einmal darauf hingewiesen, dass d1 den Durchmesser der Querschnittsfläche D1 bezeichnet, also den Nominaldurchmesser der Wellenaufnahmebohrung12 an der engsten Stelle ihres Wellenaufnahmebereichs 24 und im nicht aufgeweiteten, unverspannten Zustand der Kupplungshülse 10.

Bei diesen Durchmesserbetrachtungen bleiben die konischen Erweiterungen bzw. Fasen 13, 14 der Wellenaufnahmebohrung unberücksichtigt.

In Fig. 3b ist schematisch angedeutet, dass die Wellenaufnahmebohrung 12 der Kupplungshülse 10 mittels eines externen Aufweitwerkzeugs 26 in einem Aufweitschritt aufgeweitet worden ist, so dass die Welle 22 anschließend in die Wellenaufnahmebohrung 12 einsteckbar ist. Das Aufweiten der Wellenaufnahmebohrung 12 kann z. B. mit einem Spreizkeil 26 oder dgl. als Aufweitwerkzeug erfolgen.

Vorzugsweise wird die Wellenaufnahmeöffnung 12 bis in den Bereich plastischer Verformung der Kupplungshülse 10 hinein aufgeweitet.

Die Welle 22 wird, wie in den Fig. 3c und 3d gezeigt, in die aufgeweitete Wellenaufnahmebohrung 12 eingesteckt. Das Einstecken der Welle 22 in die Wellenaufnahmebohrung 12 kann dabei bis zu einer vorbestimmten Einstecktiefe erfolgen.

Die Welle 22 wird schließlich in der in Fig. 3e und 3f gezeigten Weise in der Wellenaufnahmebohrung 12 mittels der betreffenden Spannschraubenanordnung 18 geklemmt. Hierzu werden die Spannschrauben 28 angezogen, um den Spannspalt 16 zu verengen und eine intensive Klemmwirkung zwischen dem Kupplungselement 9 und der Welle 22 zu erzeugen. Die in Fig. 3f erkennbaren sichelblattförmigen Hohlräume 42 (übertrieben groß dargestellt) erfahren dabei eine Spreizung in Umfangsrichtung und eine Verengung in radialer Richtung. Somit kann die Eigenspannung der Kupplungsverbindung in dieser Weise zur Vergrößerung des Haltemomentes genutzt werden. Schon bei einem relativ niedrigen Anzugsmoment der Spannschraube 28 wird eine sehr gute Klemmwirkung zwischen dem Kupplungselement 9 und der Welle 22 erzielt, so dass vergleichsweise hohe Drehmomente zwischen dem Kupplungselement 9 und der Welle 22 übertragen werden können.

Zum Trennen der Kupplungsverbindung wird die Spannschraube 28 gelöst und die Welle 22 von der Kupplungshülse 10 abgezogen.

Die gesicherte Aufnahme einer zweiten Welle 5 auf der noch freien Seite der Wellenaufnahmebohrung 12 zur Herstellung einer Kupplungsverbindung gemäß Fig. 1 erfolgt in analoger Weise zu den bereits erläuterten Verfahrensschritten unter Verwendung der weiteren Spannschraube 28 zum Einklemmen der zweiten Welle 5. Es sei darauf hingewiesen, dass das Kupplungselement 9 in einer alternativen Ausführungsform zur Aufnahme von zwei Wellen mit unterschiedlichen Wellendurchmessern ausgestaltet sein kann. Die Wellenaufnahmebohrung hat somit in einem solchen Fall an den entgegengesetzten Eingangsseiten unterschiedliche Durchmesser.

Nachstehend wird ein weiteres bevorzugtes Ausführungsbeispiel der Erfindung erläutert, wobei im Wesentlichen gleiche Elemente mit den gleichen Bezugszeichen wie im ersten Ausführungsbeispiel gekennzeichnet sind, so dass zu deren Erläuterung weitgehend auf die Beschreibung des ersten Ausführungsbeispiels verwiesen werden kann. Die Beschreibung des zweiten Ausführungsbeispiels kann sich daher im Wesentlichen auf die Änderungen gegenüber dem ersten Ausführungsbeispiel beschränken.

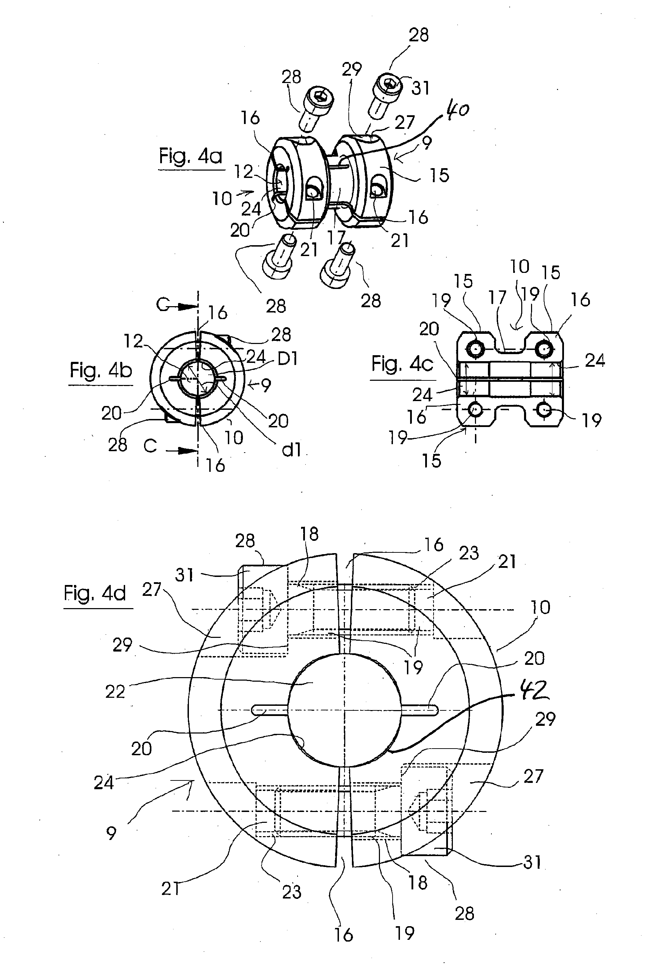

Bei dem zweiten Ausführungsbeispiel gemäß Fig. 4a - 4d ist die Kupplungshülse 10 in Längsrichtung unterteilt und somit zweiteilig ausgebildet und weist zwei von der Wellenaufnahmebohrung 12 radial nach außen durchgehende Spannspalte 16 auf, die in Umfangsrichtung der Kupplungshülse 10 um 180 Grad versetzt angeordnet sind. Im rechten Winkel zu den beiden Spannspalten 16 sind zwei in der Wellenaufnahmebohrung 12 verlaufende, radial innere Spreiznuten 20 vorgesehen.

In jedem der dickeren Bereiche 15 der Kupplungshülse 10 ist jeder Spannspalt 16 von einer jeweiligen Spannschraube 28 einer betreffenden Spannschraubenanordnung 18 quer durchsetzt, so dass insgesamt vier Spannschraubenanordnungen 18 mit vier Spannschrauben 28 vorgesehen sind.

Bei diesem zweiten Ausführungsbeispiel entfällt das Aufspreizen der Kupplungshülse 10 mit einem gesonderten Aufspreizwerkzeug. Das Aufweiten der Wellenaufnahmeöffnung kann bei dem zweiten Ausführungsbeispiel einfach dadurch erfolgen, dass die Spannschrauben gelockert und dabei die beiden Hälften der Kupplungshülse 10 etwas voneinander entfernt werden. Nach Einstecken der miteinander zu kuppelnden Wellen an den entgegengesetzten Seiten der Kupplungshülse 10 können die Spannschrauben 28 wieder angezogen werden, um die betreffenden Einsteckenden der Wellen in der Kupplungshülse einzuklemmen.

Auch bei dem zweiten Ausführungsbeispiel ist der Nominaldurchmesser d1 des Kreisquerschnitts D1 der Wellenaufnahmebohrung 12 im nicht aufgeweiteten Zustand geringfügig kleiner als die Wellendurchmesser der anzukuppelnden Wellen. Auch für das zweite Ausführungsbeispiel gilt, dass die geometrische Anordnung der radial inneren Spreiznuten 20 und deren Anzahl bei abgewandelten Ausführungsformen variieren können.

## Patentansprüche

1. Kupplungsverbindung zwischen einem Kupplungselement und wenigstens einer Welle, die einen Einsteckabschnitt mit einem vorbestimmten Nominaldurchmesser (d2) hat, wobei das Kupplungselement eine Kupplungshülse (10) mit einer den Einsteckabschnitt der Welle (22) aufnehmenden Wellenaufnahmebohrung (12) und mit einem von der Wellenaufnahmebohrung (12) radial nach außen durchgehenden Spannspalt (16) sowie eine zur Änderung der Spaltbreite des Spannspaltes (16) betätigbare Klemmvorrichtung (18) zum Einklemmen der Welle (22) in der Kupplungshülse (10) aufweist, wobei die Wellenaufnahmebohrung (12) mit einem bestimmten Nominaldurchmesser (d1) gefertigt und zur Herstellung der Kupplungsverbindung bereitgestellt worden ist,
**dadurch gekennzeichnet, dass** in der Wellenaufnahmebohrung (12) der Kupplungshülse (10) wenigstens eine innere Spreiznut (20) verläuft und dass der Nominaldurchmesser (d1) der Wellenaufnahmebohrung (12) kleiner ist als der Nominaldurchmesser (d2) des Einsteckabschnittes der Welle (12), so dass der Einsteckabschnitt der Welle (12) bei zumindest bereichsweise über ihren Nominaldurchmesser (d1) hinaus aufgeweiteter Wellenaufnahmebohrung (12) in der Wellenaufnahmebohrung (12) klemmend in Eingriff gehalten ist.

2. Kupplungselement zur Herstellung einer Kupplungsverbindung nach Anspruch 1, umfassend
eine Kupplungshülse (10) mit
einer darin vorgesehenen Wellenaufnahmebohrung (12), die zumindest über eine bestimmte Tiefe mit einem bestimmten Nominaldurchmesser (d1) gefertigt ist und in die eine jeweilige anzukuppelnde Welle (22) einzustecken ist, und mit wenigstens einem von der Wellenaufnahmebohrung (12) radial nach außen durchgehenden Spannspalt (16) sowie eine Klemmvorrichtung (18) zum Einklemmen einer betreffenden Welle (22) in der Kupplungshülse (10) durch Änderung der Spaltbreite des Spannspaltes (16),
**gekennzeichnet durch**
wenigstens eine in der Wellenaufnahmebohrung (12) der Kupplungshülse (10) verlaufende innere Spreiznut (20).

3. Kupplungselement nach Anspruch 2, **dadurch gekennzeichnet, dass** es wenigstens zwei in der Wellenaufnahmebohrung (12) der Kupplungshülse (10) in deren Achsrichtung verlaufende innere Spreiznuten (20) aufweist, wobei die inneren Spreiznuten (20) und der wenigstens eine Spannspalt (16) - im Querschnitt der Wellenaufnahmebohrung (12) gesehen - äquidistant am Innenumfang der Wellenaufnahmebohrung (12) verteilt sind.

4. Kupplungselement nach Anspruch 2 , **dadurch gekennzeichnet, dass** die Kupplungshülse (10) einteilig ausgebildet ist.

5. Kupplungselement nach Anspruch 2 oder 3, **dadurch gekennzeichnet, dass** die Kupplungshülse (10) zweiteilig ausgebildet ist und zwei Spannspalte (16) aufweist.

6. Kupplungselement nach einem der Ansprüche 2 bis 4, **dadurch gekennzeichnet, dass** die Wellenaufnahmebohrung (12) durch die Kupplungshülse (10) axial hindurchgeht und zumindest an ihren entgegengesetzten axialen Enden jeweils wenigstens einen Spannspalt (16) und jeweils wenigstens eine innere Spreiznut (20) aufweist, so dass das Kupplungselement zwei Wellen (22, 5) miteinander kuppeln kann, die an den entgegengesetzten axialen Enden der Wellenaufnahmebohrung (12) in die Kupplungshülse (10) einzustecken sind.

7. Kupplungselement nach einem der vorhergehenden Ansprüche, **dadurch gekennzeichnet, dass** die Wellenaufnahmebohrung (12) Wellenaufnahmebereiche (24) mit einem über deren Länge im Wesentlichen gleich bleibenden Nominaldurchmesser (d1) hat.

8. Kupplungselement nach einem der vorhergehenden Ansprüche, **dadurch gekennzeichnet, dass** die Wellenaufnahmebereiche (24) der Wellenaufnahmebohrung (12) an den entgegengesetzten axialen Enden der Kupplungshülse (10) unterschiedliche Nominaldurchmesser aufweisen, so dass sie Wellen mit unterschiedlichen Nominaldurchmessern aufnehmen können.

9. Kupplungselement nach einem der Ansprüche 2 bis 8, **dadurch gekennzeichnet, dass** die Klemmvorrichtung (18) für jeden Spannspalt (16) jeweils wenigstens eine Spannschraubenanordnung (18) umfasst, mittels welcher die Spaltbreite des betreffenden Spannspaltes (16) änderbar ist.

10. Kupplungselement nach Anspruch 9, **dadurch gekennzeichnet, dass** die Spannschraubenanordnung (18) eine den Spannspalt (16) in Richtung tangential zur Wellenaufnahmebohrung (12) durchsetzende und in ein Gewinde (23) der Kupplungshülse (10) eingeschraubte Spannschraube (28) aufweist.

11. Kupplungselement nach einem der Ansprüche 2 bis 10, **dadurch gekennzeichnet, dass** die Kupplungshülse (10) an ihren beiden axialen Enden im Wesentlichen gleich geformte dickere Bereiche (15) und einen dazwischen liegenden dünneren Bereich (17) aufweist und dass in jedem der dickeren Bereiche (15) wenigstens eine sich tangential zur Wellenaufnahmebohrung (12) erstreckende, einen jeweiligen Spannspalt (16) quer durchsetzende und in ein Gewinde (23) der Kupplungshülse (10) eingeschraubte Spannschraube (28) der Klemmvorrichtung vorgesehen ist.

12. Kupplungselement nach Anspruch 11, **dadurch gekennzeichnet, dass** sich die Spreiznuten (20) über die gesamte Länge der Kupplungshülse (10) erstrecken und in dem dünneren Bereich (17) der Kupplungshülse (10) einen radial nach außen offenen Durchstichspalt (40) bilden.

13. Kupplungsbaugruppe zur Herstellung einer Kupplungsverbindung nach Anspruch 1 mit einem Kupplungselement (10) nach einem der vorhergehenden Ansprüche 2 bis 12 und wenigstens einer damit drehfest zur gemeinsamen Drehung zu kuppelnden Welle (22), die einen in die Wellenaufnahmebohrung (12) der Kupplungshülse (10) einzusteckenden Einsteckabschnitt mit einem vorbestimmten Nominaldurchmesser (d2) aufweist, der größer ist als der Nominaldurchmesser (d1) des Wellenaufnahmebereiches (24) der Wellenaufnahmebohrung (12) der Kupplungshülse (10), wobei die Wellenaufnahmebohrung (12) unter Vergrößerung der Spannspaltbreite so weit aufweitbar ist, dass die Welle (22) in die Kupplungshülse (10) einsteckbar ist, und wobei eine in die Wellenaufnahmebohrung (12) eingesteckte Welle (22) durch Verengung des betreffenden Spannspaltes (16) in der Kupplungshülse (10) einklemmbar ist.

14. Verfahren zur Herstellung einer Kupplungsverbindung nach Anspruch 1, umfassend die Schritte:
- Bereitstellen eines Kupplungselementes (9) nach einem der Ansprüche 2 bis 12,
- Bereitstellen einer mit dem Kupplungselement (9) zu kuppelnden Welle, die einen in die Wellenaufnahmebohrung (12) der Kupplungshülse (10) einzusteckenden Einsteckabschnitt mit einem vorbestimmten Nominaldurchmesser (d2) aufweist, der größer ist als der Nominaldurchmesser (d1) eines Wellenaufnahmebereichs (24) der Wellenaufnahmebohrung (12) der Kupplungshülse (10),
- Aufweiten der Wellenaufnahmebohrung (12) der Kupplungshülse (10) nahe an einem axialen Ende der Kupplungshülse (10), so dass die Welle (22) an diesem axialen Ende der Kupplungshülse (10) zur Aufnahme in den Wellenaufnahmebereich in die Wellenaufnahmebohrung (12) einsteckbar ist,
- Einstecken der Welle (22) in die Wellenaufnahmebohrung (12),
- Einklemmen der Welle (22) in der Wellenaufnahmebohrung (12) unter Verengung des Spannspaltes (16) mittels der Klemmvorrichtung (18).

15. Verfahren nach Anspruch 14, wobei das Kupplungselement (9) nach Anspruch 5 oder nach einem auf Anspruch 5 rückbezogenen Anspruch ausgebildet ist, ferner umfassend die Schritte:
- Bereitstellen einer zweiten mit dem Kupplungselement (9) zu kuppelnden Welle, die einen an dem anderen axialen Ende der Kupplungshülse (10) in die Wellenaufnahmebohrung (12) einzusteckenden Einsteckabschnitt mit einem vorbestimmten Nominaldurchmesser aufweist, der geringfügig größer ist als der Nominaldurchmesser eines Wellenaufnahmebereiches (24) der Wellenaufnahmebohrung (12) an dem anderen axialen Ende der Kupplungshülse (10),
- Aufweiten der Wellenaufnahmebohrung (12) der Kupplungshülse (10) an dem anderen axialen Ende der Kupplungshülse (10), so dass die zweite Welle an diesem anderen axialen Ende der Kupplungshülse (10) zur Aufnahme in dem Wellenaufnahmebereich (24) in die Wellenaufnahmebohrung (12) einsteckbar ist,
- Einstecken der zweiten Welle in die Wellenaufnahmebohrung (12),
- Einklemmen der zweiten Welle in der Wellenaufnahmebohrung (12) unter Verengung des betreffenden Spannspaltes (16) mittels der Klemmvorrichtung (18).

16. Verfahren nach Anspruch 14 oder 15, wobei das Einklemmen der jeweiligen Welle in der Wellenaufnahmebohrung (12) durch Betätigen einer die Spaltbreite des jeweiligen Spannspaltes (16) beeinflussenden Spannschraubenanordnung (18) der Klemmvorrichtung (18) erfolgt.
